# EUROPEAN PATENT SPECIFICATION

(11) **EP 3 832 466 B1**
(45) Date of publication and mention of the grant of the patent: **04.10.2023**
(21) Application number: 20212066.3
(22) Date of filing: 14.02.2017
(51) Int. Cl.: G06F 11/14

(54) **SYSTEM AND METHOD FOR BACKUP SCHEDULING**
SYSTEM UND VERFAHREN ZUR BACKUP-PLANUNG
SYSTÈME ET PROCÉDÉ D'ORDONNANCEMENT DE SAUVEGARDE

(43) Date of publication of application: 09.06.2021
(62) Divisional of application: 17706180.1
(73) Proprietor: Huawei Technologies Co., Ltd., Longgang District Shenzhen, Guangdong 518129 (CN)
(72) Inventor: YEGER, Asaf, 80992 Munich (DE); KUVENT, Aviv, 80992 Munich (DE)
(74) Representative: Gill Jennings & Every LLP

(56) References cited:
- US-A1- 2012 089 572
- US-A1- 2014 365 740
- US-B1- 8 250 033
- US-B1- 8 429 359
- US-B1- 8 924 358

## Description

### BACKGROUND

The present invention, in some embodiments thereof, relates to determining data storage backup parameters and, more specifically, but not exclusively, to determining a time for performing a backup of a non-transitory data storage.

For brevity, the term "storage" is used henceforth to mean a non-transitory data storage.

A backup policy is frequently one of the basic elements in information technology (IT) administrators' data protection plans. A backup policy is typically a scheduled policy determining when to backup one or more storages. For example, an IT administrator may define a policy requiring the backup of a storage daily at a defined time of day and the backup of another storage hourly.

US 8,429,359 B1 describes an apparatus utilizes a volume snapshot service (VSS) to create a snapshot image file of a computer's storage system and then subsequently reads the data blocks contained in the snapshot image file. US 2014/0365740 A1 describes virtual machine (VM) backup from a storage snapshot. An embodiment operates by receiving selective backup parameters including a VM to backup and then creating a VM snapshot associated with the VM.

Backup policies are typically static. An IT administrator usually sets the policy once and rarely updates the policy. However, it is difficult to accurately predict future usage of storage in a computerized system. Over time, storage usage patterns may change. As a result, over time an existing backup policy may become unnecessarily wasteful or insufficient.

### SUMMARY

The present invention is as defined in the appended independent claims. Further implementations are disclosed in the appended dependent claims, description, and figures. In the following, parts of the description and drawing referring to embodiments, which are not covered by the claims, are not presented as embodiments of the invention, but as examples useful for understanding the invention.

It is an object of the invention to provide system and method for dynamically scheduling backup of a non-transitory data storage.

The foregoing and other objects are achieved by the features of the independent claims. Further implementation forms are apparent from the dependent claims, the description and the figures.

According to a first aspect of the invention, an apparatus for dynamically scheduling a digital storage backup comprises: at least one processor adapted to determine at least one backup parameter for a backup of a plurality of data blocks of a monitored non transitory storage. Determining the at least one backup parameter comprises: computing a storage classification for the plurality of data blocks according to a compliance of an amount of changes to a content of the plurality of data blocks with one or more threshold values, and determining the at least one backup parameter according to the classification. By computing a storage classification for the plurality of data blocks according to a compliance of an amount of changes to a content with one or more threshold values, the computed storage classification for the plurality of data blocks is in accordance with the amount of changes to the content, and thus the at least one backup parameter is in accordance with the amount of changes to the content.

According to a second aspect of the invention, a method for dynamically scheduling a digital storage backup comprises: computing a storage classification for a plurality of data blocks of a monitored non transitory storage according to a compliance of an amount of changes to the content of the plurality of data blocks with one or more threshold values, and determining at least one backup parameter for a backup of the plurality of data blocks according to the classification.

With reference to the first and second aspects, in a first possible implementation of the first and second aspects the one or more threshold values includes a member of a group consisting of: an amount of data blocks and an amount of input/output (I/O) operations, and the amount of changes includes a member of a group comprising: an amount of said plurality of data blocks, and an amount of I/O operations to said plurality of data blocks. An amount of data blocks and an amount of I/O operations are tangible measures of an amount of changes to the content of the data blocks.

With reference to the first and second aspects, or the first possible implementation of the first and second aspects, in a second possible implementation of the first and second aspects the one or more threshold values includes a time interval. Adding time interval information to the values used to determine the at least one parameter of the backup allows setting time limits between backups, regardless of the amount of changes to the content of the data blocks.

With reference to the first and second aspects, in a third possible implementation of the first and second aspects the at least one processor is further adapted to: create a snapshot of the monitored non transitory storage, and producing the amount of changes from said snapshot. A snapshot of the storage may be created from outside the storage, and may be created by another processor.

With reference to the first and second aspects, or the third possible implementation of the first and second aspects, in a fourth possible implementation of the first and second aspects the at least one processor compares the snapshot to a previous snapshot of the monitored non transitory storage to produce the amount of changes. Comparing one snapshot to an older snapshot may be performed by another processor and does not require any metadata beyond the storage content.

With reference to the first and second aspects, or the third possible implementation of the first and second aspects, in a fifth possible implementation of the first and second aspects, the at least one processor produces the amount of changes from the snapshot using machine metadata describing volume layout. Using machine metadata from the snapshot is more efficient than comparing the content of the storage.

With reference to the first and second aspects, or the third possible implementation of the first and second aspects, in a sixth possible implementation of the first and second aspects, the monitored non transitory storage is connected to a virtual machine, and the least one processor produces the amount of changes from the snapshot using changed block tracking information. When the monitored storage is connected to a virtual machine there may be changed block tracking information in the snapshot. Changed block tracking information typically includes identification of specific data blocks requiring backup thus using changed block tracking information allows efficient backups, backing up all, but no more than, the changed data blocks.

With reference to the first and second aspects, or the third possible implementation of the first and second aspects, in a seventh possible implementation of the first and second aspects, the monitored non transitory storage is connected to a virtual machine, and the at least one processor is further adapted to access an application programming interface (API) of a hypervisor running said virtual machine for creating said snapshot. Using hypervisor APIs allows easier implementation of the present invention with storage connected to a virtual machine run by a hypervisor.

With reference to the first and second aspects, in an eighth possible implementation of the first and second aspects the at least one processor is further adapted to access an API of a storage array containing the monitored non transitory storage for retrieving information indicative of said amount of changes. Using existing APIs of a storage allows easier implementation of the present invention with storage mounted in a storage array.

With reference to the first and second aspects, in a ninth possible implementation of the first and second aspects the at least one processor executes I/O tracking code for intercepting I/O operations to and from said storage, and the at least one processor computes the amount of changes from the intercepted I/O operations. Using I/O operations to compute the amount of changes to the content of the data blocks allows more refined decisions than number of blocks.

With reference to the first and second aspects, or the ninth possible implementation of the first and second aspects, in a tenth possible implementation of the first and second aspects, the I/O tracking code communicates with a file system code and a disk driver code. When the I/O tracking code communicates with a file system code and a disk driver code it may retrieve information about both what data was written to the storage and what data was read from the storage.

With reference to the first and second aspects, in an eleventh possible implementation of the first and second aspects the at least one processor is further adapted to repeatedly determine the at least one backup parameter at a predefined time interval. By monitoring the storage periodically and determining the at least one backup parameter periodically, a need to back up the storage may be identified quickly.

With reference to the first and second aspects, in a twelfth possible implementation of the first and second aspects the at least one backup parameter is a member of a group comprising: identification numbers of a plurality of the plurality of data blocks and a time to perform said backup. The present invention allows determining when to back up the storage and which blocks to backup, allowing efficient usage of back up computing and storage resources.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
- FIG. 1: is a schematic illustration of an exemplary apparatus according to some embodiments of the present invention;
- FIG. 2: is a sequence diagram of an optional flow of operations according to some embodiments of the present invention;
- FIG. 3: is a sequence diagram of another optional flow of operations according to some embodiments of the present invention, with regard to implementation of the present invention comprising a snapshot of the monitored non-transitory storage;
- FIG. 4: is a sequence diagram of another optional flow of operations according to some embodiments of the present invention, with regard to implementation of the present invention using a storage array; and
- FIG. 5: is a is a sequence diagram of another optional flow of operations according to some embodiments of the present invention, with regard to implementation of the present invention using a code to intercept input/output operations.

### DETAILED DESCRIPTION

The present invention, in some embodiments thereof, relates to determining backup parameters and, more specifically, but not exclusively, to determining a time for performing a backup.

Backup policies are typically static. An IT administrator usually sets the policy once and rarely updates the policy; however, it is difficult to accurately predict future usage of storage in a computerized system. Over time, usage patterns may change. As a result, over time an existing backup policy may become unnecessarily wasteful or insufficient. For example, in a system comprising two virtual machines, one virtual machine may be used frequently with hundreds of data changes every hour and another virtual machine may be used only once a day. Data on storage of the one virtual machine changes frequently and data on storage of another virtual machine changes rarely. In such a case, an IT administrator may set a policy to back up the storage of the one virtual machine every hour and the storage of the other virtual machine once a day. Over time, usage of the two virtual machines may change, with the one virtual machine being used less, for example only twice a day, and the other virtual machine being used much more, for example hundreds of times an hour. Now the existing backup policy is wasteful in time and storage when backing up the storage of the one virtual machine, and does not provide sufficient protection against change loss for the storage of the other virtual machine. An example of such a change is when one machine is used to run one application (for example one type of mail service) and the other machine is used to run another application (for example, another type of mail service). Over time a plurality of users using the one application may change their preferences, and migrate from using the one application to using the other application on the other machine.

Ideally, an IT manager would detect usage pattern changes as soon as they happen and adjust the backup policy accordingly. In reality, these changes may be gradual over time, and there is a time gap between the change in usage and the change in policy, resulting in waste of resources and higher risk of change loss.

The present invention, in some embodiments thereof, is an apparatus that determines one or more backup parameters according to actual usage of storage. This allows the creation of a dynamic backup policy for the storage. Backup parameters may comprise a time to backup, a time to monitor the storage, backup frequency and backup level. Backup level defines the part of the storage to back up, for example a full backup of the entire storage, changes since a last full backup, changes since a last backup of any level etc. In embodiments where the storage comprises a redundant array of independent disks (RAID) the backup level may relate to standard RAID levels.

According to some embodiments of the present invention, changes to the storage may be monitored and information may be collected about an amount of changes to the storage. The collected information about the amount of changes may be compared to one or more threshold values and the one or more backup parameters may be determined according to the compliance of the collected information with the one or more threshold values.

Typically, a storage comprises data blocks. Collected information about the amount of changes may include values for one or more parameters such as an amount of changed data blocks, identification numbers of changed data blocks, an amount of input/output (I/O) operations and/or changes to a layout of a disk or a disk volume. Examples of changes to a layout of a disk or a disk volume are a number of partitions and a size of a partition. An amount of I/O operations may comprise one or more of a group including: an amount of read operations, an amount of write operations, an amount of bytes read and an amount of bytes written.

The one or more threshold values may comprise one or more of a group including: a certain amount of time since a previous backup (that is, a certain time interval), a certain amount of bytes written, a certain amount of changed data blocks, a certain amount of I/O operations and a certain change to disk layout. Compliance of the collected information to the one or more threshold values may include identifying a difference between a value for a parameter of the group of parameters and a threshold value of the one or more threshold values. Optionally, compliance of the collected information to the one or more threshold values may further comprise identifying another difference between a value for an additional parameter of the group of parameters and an additional threshold value of the one or more threshold values.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, an apparatus, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, apparatus, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

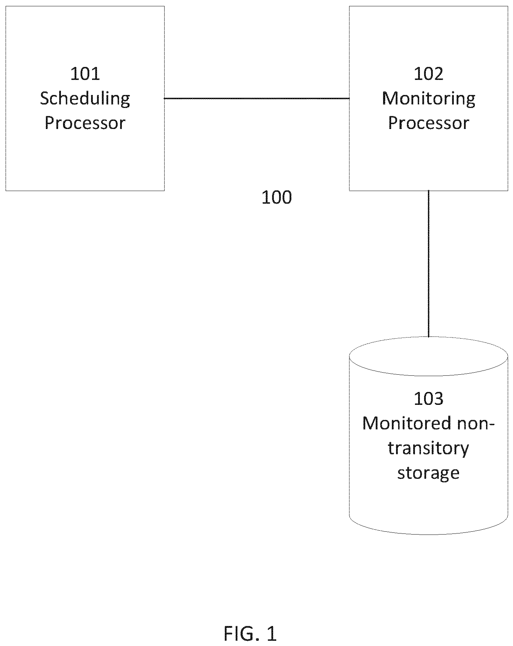

Reference is now made to FIG. 1, showing a schematic illustration of an exemplary apparatus 100 according to some embodiments of the present invention. In such embodiments, a scheduling processor 101 executes a code to determine at least one backup parameter for a backup of a storage 103. A storage may be, but is not limited to, an optical, a magnetic or a semiconductor-based device or component. Examples of storage are an optical disk drive, a magnetic hard disk, electrically erasable programmable read-only memory (EEPROM) and flash memory. Optionally, a monitored processor 102 may be connected to the storage for the purpose of collecting information indicative of an amount of changes to a content of the storage. In some embodiments the monitoring processor communicates with the storage over a network, for example a local area network (LAN). Optionally, the monitoring processor may use storage network protocols to communicate with the storage, for example Internet Small Computer System Interface (iSCSI) and Network File System (NFS). In other embodiments the monitored processor is electrically connected to the storage and may communicate with the storage over a storage connection protocol, for example Small Computer System Interface (SCSI), Serial AT Attachement (SATA), Universal Serial Bus (USB) and external Serial AT Attachement (eSATA). In some embodiments the scheduling processor and the monitoring processor are the same processor. In some other embodiments, the scheduling processor and the monitoring processor are connected to a communication network, for example a local area network (LAN), and may communicate over the communication network. In such embodiments the monitoring processor may send the collected information indicative of the amount of changes to the scheduling processor using the communication network.

A virtual machine is an emulation of a computer system. Examples of virtualization technologies for running virtual machines are Parallels Desktop, VMWare Fusion, Oracle VM VirtualBox and Citrix Xen. A hypervisor is computer software, firmware, or hardware, that creates and runs virtual machines.

In some embodiments, the monitoring processor creates a plurality of snapshots of the storage. In embodiments where the storage is connected to one or more physical computers, the monitoring processor may create a plurality of snapshots by copying the content of the storage to another storage, multiple times. In embodiments where the storage is connected to one or more virtual machines, the monitoring processor may collect information about the amount of changes to the content of the storage by executing a code for communicating with the one or more hypervisors running the one or more virtual machines. In such embodiments the communication with the one or more hypervisors may be used to create a plurality of snapshots of the one or more virtual machines.

In embodiments where the storage is installed in a storage array, the monitoring processor may execute a code for communicating with an application programming interface (API) of the storage array for retrieving information indicative of the amount of changes to the content of the storage.

In some embodiments, the monitoring processor executes a code for tracking I/O operations to and from the storage. Optionally, the I/O tracking code may communicate with a file system code and with a disk driver code and intercept I/O operations sent from the file system code to the disk driver code, and responses to the I/O operations sent from the disk driver code to the file system code. In embodiments where the storage is connected to one or more virtual machines, the I/O tracking code may be installed on a guest virtual machine or on the computer hosting the virtual machines.

In some embodiments using software defined storage, for example VMWare VAIO, the software defined storage may comprise code for intercepting and tracking I/O operations to and from the storage. The monitoring processor may communicate with an API of the software defined storage to collect the tracked I/O operations.

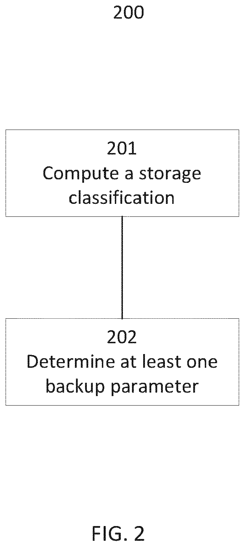

Reference is now made to FIG. 2, showing a sequence diagram 200 of an optional flow of operations according to some embodiments of the present invention. A storage classification may be an indication whether to back up the storage. The scheduling processor may compute a storage classification 201 by first comparing an amount of changes to the content of the storage to one or more threshold values and next determining the compliance of the amount of changes to the one or more threshold values. For example, in embodiments where the amount of changes comprises an amount of changed data blocks and identification numbers of the changed data blocks, one of the one or more threshold values may be a certain amount of changed data blocks. If the amount of changed data blocks is greater than the certain amount of changed data blocks, the scheduling processor may compute a storage classification to backup the storage immediately. In some embodiments, the scheduling processor may compare a time since a previous backup to a certain interval length, and compute a storage classification to back up the storage even when the amount of changed data blocks has not exceeded the certain amount of changed data blocks. In 202, the scheduling processor may determine at least one backup parameter from the storage classification. For example when the storage classification indicates that a backup is needed, the scheduling processor may determine a set of identification numbers of data blocks to back up.

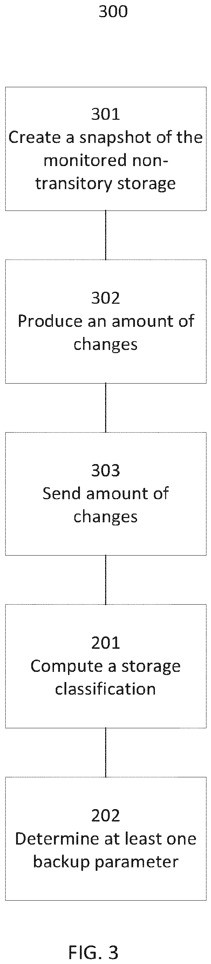

Reference is now made to FIG. 3, showing a sequence diagram of another optional flow of operations 300 according to some embodiments of the present invention. In such embodiments, a monitoring processor may create a snapshot of the storage 301 and may produce from the snapshot an amount of changes to the content of the storage 302. For example, in embodiments using VMWare virtualization technologies, the monitoring processor may communicate with the one or more hypervisors for extracting Changed Block Tracking (CBT) information. The monitoring processor may determine an amount of changed data blocks and a plurality of identification numbers identifying the changed data blocks from the CBT information.

In some embodiments, the monitoring processor produces a plurality of snapshots of the storage. When the monitoring processor produces one snapshot of the storage, the monitoring processor may compare the snapshot with another earlier snapshot to determine the amount of changed data blocks. Optionally, the monitoring processor may compare the snapshot to the earlier snapshot to determine one or more changes to the storage layout.

In some embodiments where the storage is connected to one or more virtual machines the snapshot may have machine metadata, which may be used to determine an amount of changed data blocks. Optionally, the monitoring processor may determine from the machine metadata identification numbers of changed data blocks. Optionally, the monitoring processor may determine from the machine metadata one or more changes to the storage layout.

In embodiments where the monitoring processor and the scheduling processor are separate processors and are connected via a communication network, the monitoring processor may send 303 the computed amount of changes to the scheduling processor. The scheduling processor may use the amount of changes to the storage to compute a storage classification in 201, as described above. The scheduling processor may determine in 202 at least one backup parameter according to the computed storage classification.

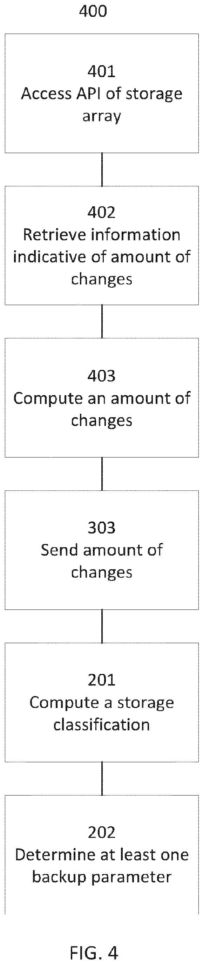

Referring now to FIG. 4, showing a sequence diagram of another optional flow of operations 400 according to some embodiments of the present invention. In such embodiments the storage is installed in a storage array. The monitoring processor may access an API of the storage array 401 for the purpose of retrieving 402 information indicative of an amount of changes to the content of the storage. The monitoring processor may compute 403 an amount of changes to the content of the storage from the retrieved information. Optionally, the information indicative of an amount of changes to the content of the storage may comprise tracked I/O operations. In such embodiments, the monitoring processor may calculate an amount of I/O write operations from the tracked I/O operations. Optionally, the monitoring processor may calculate an amount of bytes written from the tracked I/O operations. In embodiments where the monitoring processor and the scheduling processor are separate processors and are connected via a communication network, the monitoring processor may send 303 the computed amount of changes to the scheduling processor. Now, in 201 the scheduling processor may compute a storage classification using the computed amount of changes and determine 202 at least one backup parameter according to the computed storage classification.

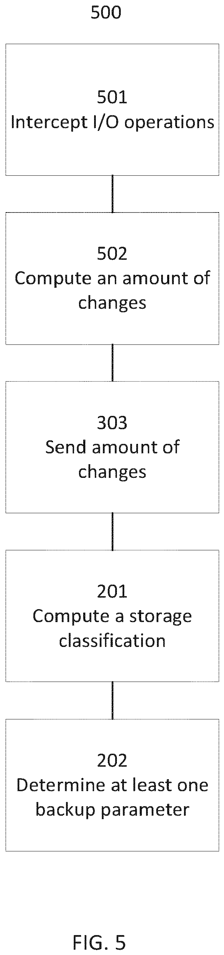

Referring now to FIG. 5, showing a sequence diagram of another optional flow of operations 500 according to some embodiments of the present invention. In such embodiments the monitoring processor executes a code to intercept input/output operations. The monitoring processor may intercept I/O operations 501, and compute an amount of changes 502. For example, the monitoring processor may compute an amount of I/O write operations from the tracked I/O operations. For another example, the monitoring processor may compute an amount of bytes written from the tracked I/O operations. In embodiments where the monitoring processor and the scheduling processor are separate processors and are connected via a communication network, the monitoring processor may send 303 the computed amount of changes to the scheduling processor. Now, in 201 the scheduling processor may compute a storage classification using the computed amount of changes and determine 202 at least one backup parameter according to the computed storage classification.

Reference is made again to FIG. 1. In some embodiments having a monitoring processor, the monitoring processor may determine the amount of changes to the content of the storage from the collected information about the amount of changes and send the scheduling processor an amount of changes to the content of the storage. In other embodiments the monitoring processor may send the scheduling processor the collected information about the amount of changes. In such embodiments, the scheduling processor may determine the amount of changes to the content of the storage from the collected information.

In some embodiments, the monitoring processor periodically collects information and detects an amount of changes to the content of the storage, for example every one minute or every one hour. Optionally, the scheduling processor may add the amount of changes to a sum of changes. In such embodiments, the scheduling processor may compare the sum of to one of the one or more threshold values and determine the storage compliance to the compliance of the sum of changes with the one threshold. Optionally, the scheduling processor may reset the sum of changes to an initial value, for example zero, after each time the storage is backed up.

In some embodiments, the at least one backup parameter may be a next time to monitor the storage. This next time to monitor the storage may be different from a predefined period for monitoring the storage, for example to trigger monitoring of the storage earlier than the predefined period would.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant virtual computing technologies and storage technologies will be developed and the scope of the terms "virtual computing", "virtual machine" and "storage" are intended to include all such new technologies a priori.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals there between.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable sub combination or as suitable in any other described embodiment of the invention. Certain features described in the context of various embodiments are not to be considered essential features of those embodiments, unless the embodiment is inoperative without those elements.

## Claims

1. A storage system, comprising: at least one processor configured to:
monitor changes to the storage usage;
collect information about an amount of changes to the storage;
compare the collected information to one or more threshold values;
determine one or more backup parameters according to the compliance of the collected information with the one or more threshold values;
wherein the collected information comprises values for one or more parameters including an amount of input/output (I/O) operations, and wherein an amount of I/O operations comprises one or more of a group including: an amount of read operations, an amount of write operations, an amount of bytes read and an amount of bytes written;
adjust a backup policy according to the backup parameter.

2. The storage system of claim 1, wherein at least one processor is further configured to:
perform a backup operation according to an adjusted backup policy.

3. A method for backing up data, comprising:
monitoring changes to the storage usage;
collecting information about an amount of changes to the storage;
comparing the collected information to one or more threshold values;
determining one or more backup parameters according to the compliance of the collected information with the one or more threshold values;
wherein the collected information comprises values for one or more parameters including an amount of input/output (I/O) operations, and wherein an amount of I/O operations comprises one or more of a group including: an amount of read operations, an amount of write operations, an amount of bytes read and an amount of bytes written;
adjusting a backup policy according to the backup parameter.

4. The method of claim 3, further comprising:
performing a backup operation according to an adjusted backup policy.

## Patentansprüche

1. Speichersystem, umfassend: mindestens einen Prozessor, der dazu konfiguriert ist:
Änderungen an der Speichernutzung zu überwachen;
Informationen über eine Menge an Änderungen an dem Speicher zu sammeln;
die gesammelten Informationen mit einem oder mehreren Schwellenwerten zu vergleichen;
einen oder mehrere Backupparameter gemäß der Übereinstimmung der gesammelten Informationen mit dem einen oder den mehreren Schwellenwerten zu bestimmen;
wobei die gesammelten Informationen Werte für einen oder mehrere Parameter umfassen, die eine Menge an Eingabe/Ausgabe(E/A)-Vorgängen beinhalten, und wobei eine Menge an Eingabe/Ausgabe(E/A)-Vorgängen einen oder mehrere von einer Gruppe umfasst, die Folgendes beinhaltet: eine Menge an Lesevorgängen, eine Menge an Schreibvorgängen, eine Menge an gelesenen Bytes und eine Menge an geschriebenen Bytes;
eine Backuprichtlinie gemäß dem Backupparameter anzupassen.

2. Speichersystem nach Anspruch 1, wobei mindestens ein Prozessor ferner dazu konfiguriert ist:
einen Backupvorgang gemäß einer angepassten Backuprichtlinie durchzuführen.

3. Verfahren zum Datenbackup, umfassend:
Überwachen von Änderungen an der Speichernutzung;
Sammeln von Informationen über eine Menge an Änderungen an dem Speicher;
Vergleichen der gesammelten Informationen mit einem oder mehreren Schwellenwerten;
Bestimmen eines oder mehrerer Backupparameter gemäß der Übereinstimmung der gesammelten Informationen mit dem einen oder den mehreren Schwellenwerten;
wobei die gesammelten Informationen Werte für einen oder mehrere Parameter umfassen, die eine Menge an Eingabe/Ausgabe(E/A)-Vorgängen beinhalten, und wobei eine Menge an Eingabe/Ausgabe(E/A)-Vorgängen einen oder mehrere von einer Gruppe umfasst, die Folgendes beinhaltet: eine Menge an Lesevorgängen, eine Menge an Schreibvorgängen, eine Menge an gelesenen Bytes und eine Menge an geschriebenen Bytes;
Anpassen einer Backuprichtlinie gemäß dem Backupparameter.

4. Verfahren nach Anspruch 3, ferner umfassend:
Durchführen eines Backupvorgangs gemäß einer angepassten Backuprichtlinie.

## Revendications

1. Système de stockage, comprenant : au moins un processeur configuré pour :
surveiller les modifications de l'utilisation du stockage ;
collecter des informations sur une quantité de modifications apportées au stockage ;
comparer les informations collectées à une ou plusieurs valeurs de seuil ;
déterminer un ou plusieurs paramètres de sauvegarde en fonction de la conformité des informations collectées avec la ou les valeurs de seuil ;
dans lequel les informations collectées comprennent des valeurs pour un ou plusieurs paramètres comportant une quantité d'opérations d'entrée/sortie (I/O), et dans lequel une quantité d'opérations I/O comprend une ou plusieurs d'un groupe comportant : une quantité d'opérations de lecture, une quantité d'opérations d'écriture, une quantité d'octets lus et une quantité d'octets écrits ;
ajuster une politique de sauvegarde en fonction du paramètre de sauvegarde.

2. Système de stockage selon la revendication 1, dans lequel au moins un processeur est en outre configuré pour :
réaliser une opération de sauvegarde en fonction d'une politique de sauvegarde ajustée.

3. Procédé de sauvegarde de données, comprenant :
la surveillance des modifications de l'utilisation du stockage ;
la collecte d'informations sur une quantité de modifications apportées au stockage :
la comparaison des informations collectées à une ou plusieurs valeurs de seuil ;
la détermination d'un ou plusieurs paramètres de sauvegarde en fonction de la conformité des informations collectées avec les une ou plusieurs valeurs de seuil ;
dans lequel les informations collectées comprennent des valeurs pour un ou plusieurs paramètres comportant une quantité d'opérations d'entrée/sortie (I/O), et dans lequel une quantité d'opérations I/O comprend une ou plusieurs d'un groupe comportant : une quantité d'opérations de lecture, une quantité d'opérations d'écriture, une quantité d'octets lus et une quantité d'octets écrits ;
l'ajustement d'une politique de sauvegarde en fonction du paramètre de sauvegarde.

4. Procédé selon la revendication 3, comprenant en outre :
la réalisation d'une opération de sauvegarde en fonction d'une politique de sauvegarde ajustée.
